# FASCICULE DE BREVET EUROPEEN

(11) **EP 2 941 383 B1**
(45) Date de publication et mention de la délivrance du brevet: **09.10.2019**
(21) Numéro de dépôt: 13824631.9
(22) Date de dépôt: 24.12.2013
(51) Int. Cl.: B64D 41/00, B64D 47/00, H02J 3/00

(54) **PROCEDE DE GESTION DU RESEAU D'ALIMENTATION ELECTRIQUE D'UN AERONEF**
VERWALTUNGSVERFAHREN FÜR EIN STROMVERSORGUNGSNETZ EINES FLUGZEUGS
MANAGEMENT METHOD OF A POWER SUPPLY NETWORK OF AN AIRCRAFT

(30) Priorité: 03.01.2013 FR 1350034
(43) Date de publication de la demande: 11.11.2015
(73) Titulaire: Safran Power Units, 31200 Toulouse (FR)
(72) Inventeur: RIDEAU, Jean-François, 31170 Tournefeuille (FR); DALMAS, Florent, 31380 Garidech (FR)
(74) Mandataire: Gevers & Orès
(86) Numéro de dépôt international: PCT/FR2013/053262
(87) Numéro de publication internationale: WO 2014/106712

(56) Documents cités:
- EP-A1- 2 524 869
- FR-A1- 2 964 087
- US-A- 4 091 613
- US-B1- 6 641 084

## Description

La présente invention concerne le domaine de l'alimentation électrique d'un aéronef et, plus particulièrement, un procédé de gestion du réseau d'alimentation électrique d'un aéronef.

Un aéronef comporte de manière classique un réseau d'alimentation électrique afin d'alimenter les divers équipements de l'aéronef (actionneurs mécaniques, commandes de vol, système multimédia des sièges pour passagers, ventilation de la cabine, etc.). D'un point de vue électrique, un équipement de l'aéronef est considéré comme une charge qui consomme de l'énergie électrique.

Afin de permettre une gestion raisonnée de l'énergie électrique dans le réseau d'alimentation électrique, les charges ont deux natures possibles: les charges dites « essentielles » qui sont importantes pour le fonctionnement de l'aéronef (commande de vol, etc.) et les charges dites « non essentielles » qui sont moins importantes pour le fonctionnement de l'aéronef (système multimédia des sièges pour passagers, ventilation de la cabine, etc.). Les charges sont également ségréguées selon leur installation géographique pour être alimentées par les sources les plus proches, et éviter, autant que possible, la perte de redondance et/ou d'équipements fonctionnellement connexes.

Le réseau d'alimentation électrique comporte de manière classique une source principale d'énergie qui est prélevée sur les moteurs de l'aéronef qui participent à la poussée de l'aéronef. Autrement dit, un moteur d'aéronef fournit, d'une part, une énergie propulsive pour permettre à l'aéronef de se déplacer et, d'autre part, une énergie non propulsive, qui est utilisée comme source principale d'énergie du réseau d'alimentation électrique.

Au fil des années, les besoins en énergie électrique se sont accrus pour un aéronef. Aussi, lorsque les moteurs de l'aéronef sont à bas régime, par exemple, lors de l'atterrissage, le réseau d'alimentation électrique n'est parfois pas suffisamment alimenté ce qui présente un inconvénient et ne permet pas l'alimentation des charges non essentielles (système multimédia des sièges pour passagers, etc.) ce qui présente un inconvénient pour les passagers de l'aéronef. Une solution immédiate pour éliminer cet inconvénient consiste à augmenter le régime des moteurs de l'aéronef lors de l'atterrissage mais cela augmente la consommation de carburant et n'est pas souhaité.

Il a été proposé par la demande de brevet FR 2 964 087 de la société TURBOMECA d'utiliser un groupe de puissance principal lorsque les moteurs ne suffisent pas à répondre aux besoins du réseau d'alimentation électrique, c'est-à-dire, comme source d'alimentation auxiliaire. Aussi, par défaut, les moteurs de l'aéronef sont sollicités en permanence et doivent être surdimensionnés pour répondre aux besoins électriques. Une telle gestion du réseau d'alimentation électrique engendre une surconsommation en carburant ce qui présente un inconvénient.

Le document US6641084 montre un réseau d'alimentation connu de l'art antérieur dont en conditions normales de fonctionnement le bus de distribution est alimenté par une source d'alimentation auxiliaire (APU).

### PRESENTATION GENERALE DE L'INVENTION

Afin d'éliminer au moins certains de ces inconvénients, l'invention concerne un procédé de gestion d'un réseau d'alimentation électrique d'un aéronef, le réseau d'alimentation comportant au moins un bus de distribution agencé pour alimenter des charges électriques, au moins un générateur d'un moteur propulsif de l'aéronef adapté pour fournir une source d'énergie électrique, au moins un groupe de puissance principal de classe moteur adapté pour fournir une source d'énergie électrique, une pluralité de contacteurs adaptés pour connecter électriquement les bus de distribution avec le générateur de moteur propulsif et/ou le groupe de puissance principal et un module de gestion adapté pour commander les contacteurs, procédé dans lequel en conditions normales de fonctionnement de l'aéronef, le module de gestion commande les contacteurs de manière à alimenter le bus de distribution par le groupe de puissance principal de classe moteur et en fonctionnement de secours de l'aéronef, le module de gestion commande les contacteurs de manière à alimenter le bus de distribution par le générateur de moteur propulsif.

Selon le procédé de gestion, le moteur de l'aéronef n'est plus mis à contribution par défaut pour fournir de l'énergie électrique en conditions normales de vol. Autrement dit, il n'est plus nécessaire de sur-dimensionner le moteur de l'aéronef afin qu'il fournisse une énergie non-propulsive importante. En effet, selon l'invention, le générateur de moteur d'aéronef n'est utilisé que pour un fonctionnement de secours, c'est-à-dire, en cas de dysfonctionnement du groupe de puissance principal de classe moteur. De manière avantageuse, le moteur d'aéronef est moins sollicité en conditions normales de vol ce qui permet de diminuer sa consommation en carburant. L'énergie générée par le moteur d'aéronef est essentiellement une énergie propulsive, l'énergie non-propulsive étant fournie par le groupe de puissance principal de classe moteur en fonctionnement normal. L'utilisation d'un groupe de puissance principal de classe moteur permet de répondre aux besoins du réseau d'alimentation indépendamment des moteurs de l'aéronef ce qui améliore le rendement énergétique. En outre, un groupe de puissance principal de classe moteur possède une fiabilité accrue par comparaison à un groupe de puissance auxiliaire classique ce qui est avantageux.

En conditions normales de fonctionnement de l'aéronef, le bus de distribution est alimenté exclusivement par le groupe de puissance principal de classe moteur de manière à éviter toute utilisation du générateur de moteur propulsif.

Le réseau d'alimentation comportant un premier groupe de puissance principal de classe moteur et un deuxième groupe de puissance principal de classe moteur, le réseau d'alimentation comportant au moins deux bus de distribution appartenant respectivement à une partie droite et à une partie gauche du réseau d'alimentation, le premier groupe de puissance principal de classe moteur et le deuxième groupe de puissance principal de classe moteur alimentent respectivement le bus de distribution de la première partie et le bus de distribution de la deuxième partie du réseau d'alimentation en conditions normales de fonctionnement de l'aéronef de manière à augmenter la fiabilité de l'alimentation électrique, l'aéronef étant toujours apte à fonctionner en cas de défaillance d'une partie du réseau d'alimentation.

Selon un aspect de l'invention, le deuxième groupe de puissance principal de classe moteur alimente à lui seul les bus de distribution de la première partie et de la deuxième partie du réseau d'alimentation en cas de dysfonctionnement du premier groupe de puissance principal de classe moteur. Autrement dit, chaque groupe de puissance est dimensionné pour assurer, de manière continue, l'alimentation de l'ensemble du réseau électrique.

Selon un autre aspect de l'invention, le deuxième groupe de puissance principal de classe moteur alimente le bus de distribution de la deuxième partie du réseau d'alimentation et le générateur de moteur propulsif alimente le bus de distribution de la première partie du réseau d'alimentation en cas de dysfonctionnement du premier groupe de puissance principal de classe moteur. Si le groupe de puissance est dimensionné pour assurer l'alimentation d'une seule partie du réseau d'alimentation, le générateur de moteur propulsif assure l'alimentation de la partie du réseau dont le groupe de puissance est défaillant.

De préférence, le réseau d'alimentation comportant un premier générateur de moteur propulsif et un deuxième générateur de moteur propulsif, le premier générateur et le deuxième générateur alimentent respectivement le bus de distribution de la première partie et le bus de distribution de la deuxième partie du réseau d'alimentation en fonctionnement de secours de l'aéronef.

De manière préférée, le réseau d'alimentation comportant un sous-réseau d'alimentation d'urgence, le module de gestion commande les contacteurs de manière à alimenter le sous-réseau d'alimentation d'urgence par une source d'énergie d'urgence indépendante en cas de dysfonctionnement du générateur de moteur propulsif en fonctionnement de secours. Ainsi, en cas de défaillance simultanée du groupe de puissance principale et du générateur de moteur propulsif, les fonctions vitales de l'aéronef peuvent toujours être alimentées.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un réseau d'alimentation selon l'invention en absence d'alimentation ;
- la figure 2 est une représentation schématique du réseau d'alimentation avec une alimentation sur batterie ;
- la figure 3 est une représentation schématique du réseau d'alimentation avec une alimentation par une servitude externe ;
- la figure 4 est une représentation schématique du réseau d'alimentation avec une alimentation par les groupes de puissance principaux de classe moteur en conditions normales de fonctionnement ;
- la figure 5A est une représentation schématique de l'activation des groupes de puissance principaux de classe moteur par un unique générateur de gaz de l'aéronef ;
- la figure 5B est une représentation schématique de l'activation des groupes de puissance principaux de classe moteur par deux générateurs de gaz de l'aéronef ;
- la figure 6 est une représentation schématique du réseau d'alimentation avec une alimentation par un unique groupe de puissance principal de classe moteur ;
- la figure 7 est une représentation schématique du réseau d'alimentation dont la partie gauche est alimentée par un unique groupe de puissance de classe moteur et dont la partie droite est alimentée par un moteur de l'aéronef ;
- la figure 8 est une représentation schématique du réseau d'alimentation dont la partie gauche et la partie droite sont alimentées par un unique groupe de puissance de classe moteur ;
- la figure 9 est une représentation schématique du réseau d'alimentation dont la partie gauche et la partie droite sont alimentées par les moteurs de l'aéronef ; et
- la figure 10 est une représentation schématique du réseau d'alimentation avec une source d'énergie d'urgence.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

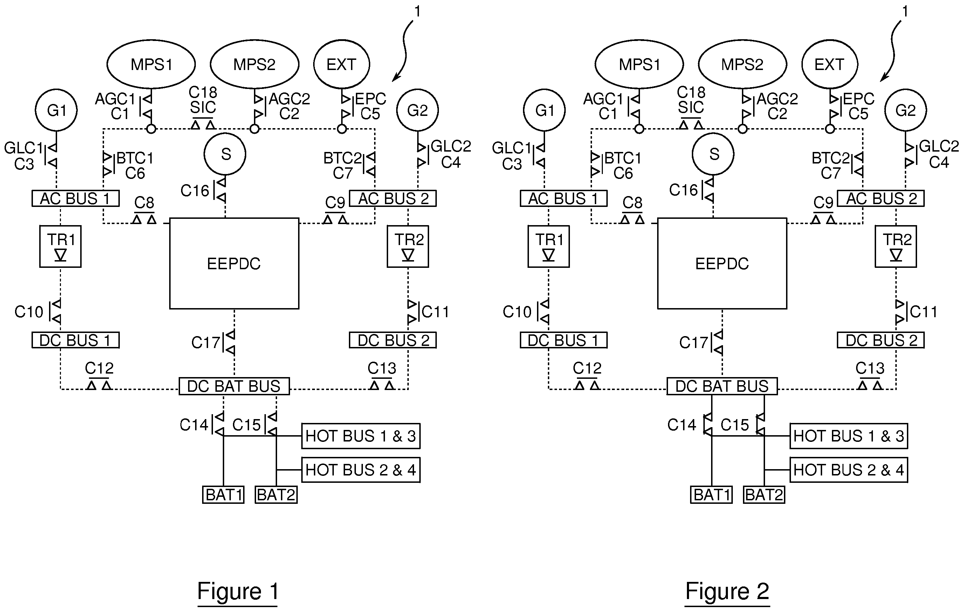

En référence à la figure 1, un aéronef comporte de manière usuelle un réseau d'alimentation électrique 1 afin d'alimenter les divers équipements de l'aéronef (actionneurs mécaniques, commandes de vol, système multimédia des sièges pour passagers, ventilation de la cabine). D'un point de vue électrique, un équipement de l'aéronef est considéré comme une charge qui consomme de l'énergie électrique et qui est alimenté par un Bus de distribution AC ou DC. Dans cet exemple, le réseau d'alimentation électrique 1 comporte cinq Bus de distribution, deux BUS alternatifs principaux (ACBUS1, ACBUS2) et trois BUS continus (DCBUS1, DCBUS2, DCBATBUS) ainsi qu'un sous-réseau d'alimentation d'urgence EEPDC, appelé également coeur d'alimentation d'urgence.

Autrement dit, chaque BUS distribue l'énergie électrique aux charges du réseau d'alimentation 1 en fonction de ses besoins (courant continu ou courant alternatif).

Le réseau d'alimentation est classiquement divisé géographiquement en deux parties dans l'aéronef : une partie dite « gauche » et une partie dite « droite ». Dans cet exemple, la partie gauche comporte deux Bus de distribution gauches (ACBUS1, DCBUS1) tandis que la partie droite comporte deux Bus de distribution droits (ACBUS1, DCBUS1), le bus de batterie (DCBATBUS) étant commun aux parties droite et gauche. De manière préférée, le réseau d'alimentation est symétrique ce qui facilite sa reconfiguration.

Toujours en référence à la figure 1, le réseau d'alimentation 1 comporte également des batteries électriques BAT1, BAT2 qui alimentent le bus de batterie DCBATBUS. Les batteries électriques BAT1, BAT2 peuvent en outre être rechargées par le bus de batterie DCBATBUS lors du vol de l'aéronef ou lorsque l'aéronef est au sol. Sur la figure 1, le réseau d'alimentation 1 peut être relié à des servitudes électriques EXT d'un aéroport qui permettent de fournir de l'énergie électrique à l'ensemble du réseau d'alimentation 1 sans utiliser les sources d'énergie propres à l'aéronef.

Dans cet exemple, de manière connue de l'homme du métier, les BUS continus (DCBUS1 et DCBUS2) sont alimentés soit par le bus de batterie (DCBATBUS) soit par les BUS alternatifs (ACBUS1, ACBUS2) via des transformateurs (TR1 et TR2), soit l'un part l'autre.

Toujours en référence à la figure 1, le réseau d'alimentation 1 comporte deux générateurs G1, G2 entraînés par les moteurs propulsifs principaux de l'aéronef MOT1, MOT2 (non représentés) qui sont adaptés pour fournir une source d'énergie électrique. Les moteurs principaux MOT1, MOT2 sont classiquement montés sur l'aéronef et adaptés pour fournir la poussée nécessaire au déplacement de l'aéronef. La génération d'une source d'énergie électrique par un générateur de moteur propulsif G1, G2 est connue de l'homme du métier et ne sera pas détaillée plus en avant. Selon le type d'aéronef et/ou de réseau d'alimentation associé, le nombre de générateurs de moteur propulsif G1, G2 peut être supérieur à deux. En outre, le nombre de générateurs de moteur propulsif G1, G2 est indépendant du nombre de moteur principaux de l'aéronef MOT1, MOT2.

Selon l'invention, en référence à la figure 1, le réseau d'alimentation 1 comporte en outre deux groupes de puissance principaux MPS1, MPS2 de classe moteur adaptés pour fournir une source d'énergie électrique. De tels groupes de puissance principaux sont connus de la demande de brevet FR 2 964 087 de la société TURBOMECA.

Par la suite, un groupe de puissance principal est désigné groupe de puissance principal et référencé sous l'acronyme MPS pour « Main Power Source ». Un groupe de puissance MPS a pour base un groupe auxiliaire de puissance (connu sous son abréviation anglaise APU pour « Auxiliary Power Unit ») dont la fiabilité est augmentée de manière à être équivalente à celle d'un moteur propulsif d'un aéronef. A cet effet, le groupe de puissance MPS est dit « de classe moteur ». Un groupe de puissance MPS est composé d'un ou plusieurs générateurs thermiques entrainant un ou plusieurs générateurs électriques. Les générateurs thermiques peuvent être de type turbine à gaz ou moteur à piston, les générateurs électriques peuvent être à aimant permanent ou à trois étages (générateur à aimant permanent dit PMG, excitatrice, alternateur) accouplés directement au réacteur par un multiplicateur en puissance et éventuellement en fréquence.

Le réseau d'alimentation 1 comporte, en outre, un sous-réseau d'urgence EEPDC pour « Emergency Electrical Power Distribution Center » adapté pour alimenter les charges les plus essentielles lors d'un dysfonctionnement généralisé des sources d'énergie du réseau d'alimentation électrique 1 (dysfonctionnement des groupes de puissance principaux MPS1, MPS2 et des générateurs G1, G2).

Le sous-réseau d'urgence EEPDC est relié à une source d'énergie d'urgence S qui se présente, à titre d'exemple, sous la forme d'une hélice de génération d'énergie connue de l'homme du métier sous sa désignation RAT pour « Ram Air Turbine ». Ainsi, à la manière d'une éolienne, l'hélice RAT permet d'alimenter électriquement les fonctions vitales de l'aéronef.

Toujours en référence à la figure 1, les différents BUS et les différentes sources d'énergie électrique sont mis en relation via une pluralité de contacteurs C1-C18 qui sont commandés par un module de gestion (non représenté) connu de l'homme du métier sous son abréviation anglaise PEPDC pour « Primary Electrical Power Distribution Center ». Un tel module de gestion permet de commander les contacteurs C1-C18 afin de relier certaines sources d'énergie à certains Bus de distribution en fonction de la configuration souhaitée du réseau d'alimentation 1. De manière avantageuse, le module de gestion permet de hiérarchiser les sources d'énergie afin de commander leur utilisation en fonctionnement normal de vol, en fonctionnement de secours ou d'urgence comme cela sera détaillé par la suite.

En référence à la figure 1, le réseau d'alimentation 1 comporte deux contacteurs C1-C2 permettant de connecter électriquement les deux groupes de puissance principaux MPS1, MPS2 et deux contacteurs C3-C4 pour connecter électriquement les deux générateurs de moteur propulsif G1, G2, le contacteur C3 permettant de connecter électriquement les servitudes externes.

Les contacteurs C6-C7 permettent de relier respectivement les BUS alternatifs ACBUS1, ACBUS2 aux groupes de puissance principaux MPS1, MPS2. Les contacteurs C8-C9 permettent de relier les BUS alternatifs ACBUS1, ACBUS2 au sous-réseau d'urgence EEPDC. De manière similaire, les contacteurs C10-C11 permettent de relier respectivement les transformateurs TR1, TR2 aux BUS continus DCBUS1, DCBUS2 qui sont respectivement reliés au bus de batterie DCBATBUS par les contacteurs C12-C13. Les batteries BAT1, BAT2 sont respectivement reliées au bus de batterie DCBATBUS par les contacteurs C14-C15.

Le contacteur C16 connecte, pour sa part, le sous-réseau d'urgence EEPDC à la source d'énergie d'urgence S, le contacteur C17 connectant le sous-réseau d'urgence EEPDC au bus de batterie DCBATBUS. Comme illustré à la figure 1, le contacteur C18 connecte la partie gauche du réseau d'alimentation à sa partie droite.

Le module de gestion commande les contacteurs C1-C18 afin de reconfigurer le réseau d'alimentation et mettre en relation certaines sources d'énergie avec certains bus de distribution. Dans l'exemple de la figure 1, les contacteurs C1-C18 sont tous ouverts.

Selon l'invention, en conditions normales de fonctionnement de l'aéronef, les Bus de distribution sont alimentés par les groupes de puissance principaux MPS1, MPS2 de classe moteur tandis qu'en fonctionnement de secours de l'aéronef, les Bus de distribution sont alimentés par les générateurs de moteur propulsif G1, G2. Par fonctionnement de secours, on entend qu'au moins un des groupes de puissance principaux MPS1, MPS2 est défaillant. Le module de gestion commande les contacteurs C1-C18 de manière à ce que les groupes de puissance principaux MPS1, MPS2 fournissent de manière par défaut l'énergie électrique aux Bus de distribution afin de ne pas solliciter les moteurs principaux de l'aéronef MOT1, MOT2 ce qui limite la consommation de carburant desdits moteurs MOT1, MOT2.

Comme illustré à la figure 1, les Bus de distribution de la partie « gauche » du réseau d'alimentation 1 sont adaptés pour être alimentés, en conditions normales, par le premier groupe de puissance MPS1 et, en conditions de secours, par le premier générateur de moteur propulsif G1. De manière similaire, les Bus de distribution de la partie « droite » du réseau d'alimentation 1 sont adaptés pour être alimentés, en conditions normales, par le deuxième groupe de puissance MPS2 et, en conditions de secours, par le deuxième générateur de moteur propulsif G2.

Plusieurs mises en oeuvre du procédé de gestion du réseau d'alimentation électrique de la figure 1 vont être présentées en référence aux figures 2 à 10 dans lesquelles des lignes continues correspondent à une alimentation électrique et des lignes discontinues correspondent à une absence d'alimentation électrique. Dans ces différentes mises en oeuvre, le module de gestion commande les contacteurs C1-C18 en fonction de la disponibilité des différentes sources d'énergie.

### - Alimentation par batteries

En référence à la figure 2, lorsque l'aéronef est au sol, les batteries de l'aéronef BAT1, BAT2 sont activées du fait de la connexion des contacteurs C14-C5 de manière à alimenter le bus de distribution DCBATBUS. Une telle alimentation au moyen de batteries est similaire à l'art antérieur.

### - Alimentation par servitudes électriques

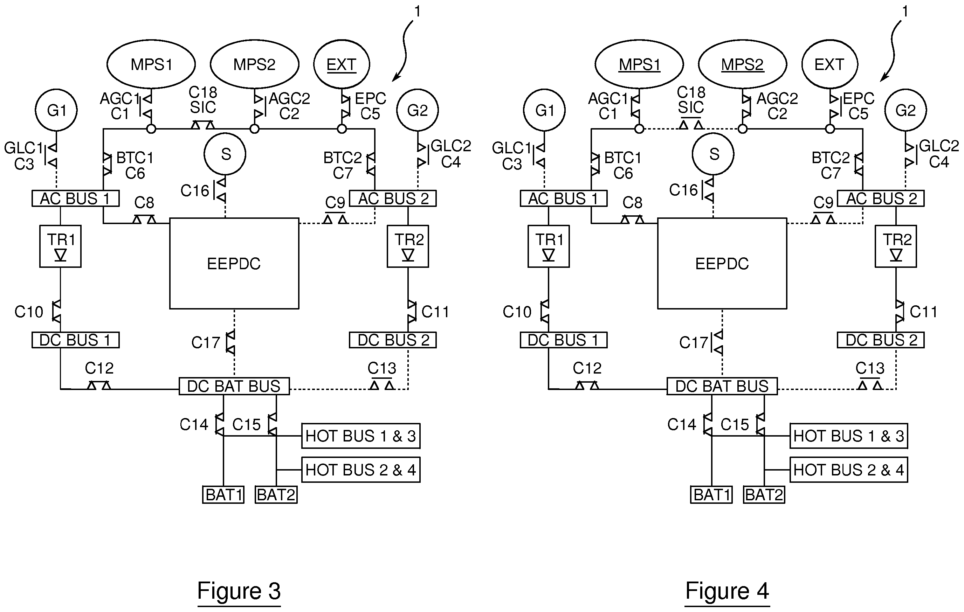

En référence à la figure 3 lorsque l'aéronef est au sol, le réseau d'alimentation électrique 1 est alimenté par les servitudes électriques EXT de l'aéroport qui alimentent les bus de distribution de la partie gauche et de la partie droite du réseau d'alimentation électrique 1 du fait des connexions des contacteurs C5, C6, C7, C8, C10, C11 et C12. En particulier, les servitudes permettent l'alimentation des BUS AC (ACBUS1, ACBUS2), des BUS DC (DCBATBUS, DCBUS1 et DCBUS2) et des transformateurs (TR1 et TR2).

De manière avantageuse, les servitudes électriques EXT permettent le rechargement des batteries BAT1, BAT2 de l'aéronef comme illustré à la figure 3 du fait de la connexion des contacteurs C14-C15. Une telle alimentation au moyen de servitudes électriques est similaire à l'art antérieur.

### - Alimentation autonome en conditions normales

En référence à la figure 4, lorsque l'aéronef est autonome par exemple en vol ou au sol (avion au roulage), le réseau d'alimentation électrique 1 est alimenté par les groupes de puissance principaux MPS1, MPS2 qui alimentent respectivement les bus de distribution de la partie gauche et la partie droite du réseau d'alimentation électrique 1 du fait des connexions des contacteurs C1, C2, C6, C7, C8, C10, C11 et C12. De manière avantageuse, les groupes de puissance MPS1, MPS2 permettent l'alimentation des BUS AC (ACBUS1, ACBUS2), des BUS DC (DCBATBUS, DCBUS1 et DCBUS2) et des transformateurs (TR1 et TR2) et le rechargement des batteries BAT1, BAT2 de l'aéronef comme illustré à la figure 4.

En conditions normales, les générateurs de moteur propulsif G1, G2 ne sont pas mis à contribution dans la génération électrique du réseau d'alimentation électrique. Une telle gestion du réseau d'alimentation électrique 1 va à l'encontre des préjugés de l'art antérieur qui imposait une alimentation des bus de distribution par les générateurs de moteur propulsif G1, G2. Grâce à l'invention, il n'est plus nécessaire d'adapter le régime des moteurs propulsifs de l'aéronef pour répondre aux besoins électriques de l'aéronef. Autrement dit, les moteurs de l'aéronef ne fournissent qu'une énergie propulsive en conditions normales ce qui limite leur consommation de carburant. De manière avantageuse, les besoins électriques ne sont plus corrélés aux besoins propulsifs.

### - Alimentation en vol en conditions de secours : défaillance d'un groupe de puissance MPS

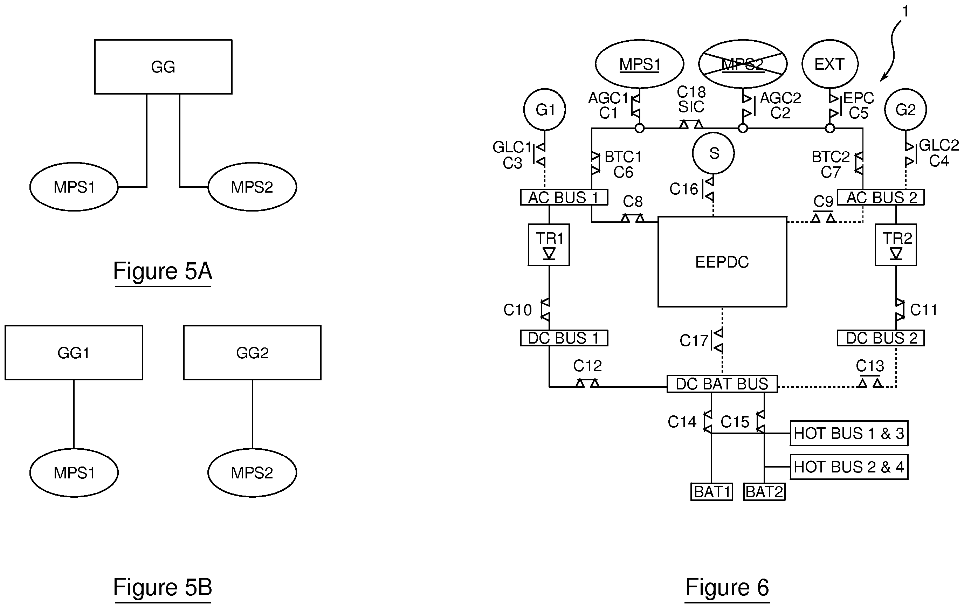

Selon un premier aspect, en référence à la figure 5A, les deux groupes de puissance principaux MPS1, MPS2 comportent un seul et unique générateur de gaz GG pour alimenter l'ensemble du réseau 1. Comme indiqué précédemment, étant donné que les groupes de puissance principaux MPS1, MPS2 sont de classe moteur, le générateur de gaz GG possède un degré de fiabilité élevé, équivalent aux moteurs propulsifs de l'aéronef. Autrement dit, chaque groupe de puissance principal MPS1, MPS2 est dimensionné pour prendre à sa charge l'ensemble du réseau d'alimentation 1.

Selon cette hypothèse, en référence à la figure 6, si le deuxième groupe de puissance principal MPS2 comporte un défaut et que son générateur de gaz GG n'est pas défectueux, sous la commande du module de gestion, le premier groupe de puissance MPS1 peut prendre le relais et alimenter, à lui seul, les bus de distribution de la partie droite et de la partie gauche du réseau d'alimentation électrique 1 comme illustré à la figure 6. A cet effet, le contacteur C2 est ouvert pour déconnecter le deuxième groupe de puissance principal MPS2. Le contacteur C18 est fermé pour permettre l'alimentation des deux parties du réseau d'alimentation 1.

Selon un deuxième aspect, en référence à la figure 5B, les deux groupes de puissance principaux MPS1, MPS2 comportent chacun un générateur de gaz GG1, GG2. Comme indiqué précédemment, étant donné que les groupes de puissance principaux MPS1, MPS2 sont de classe moteur, chaque générateur de gaz GG1, GG2 possède un degré de fiabilité élevé. Chaque groupe de puissance MPS1, MPS2 est dimensionné pour prendre à sa charge qu'une partie du réseau d'alimentation 1. Dans cet exemple, comme indiqué précédemment, les groupes de puissance MPS1, MPS2 alimentent respectivement les bus de distribution de la partie gauche et de la partie droite du réseau d'alimentation 1.

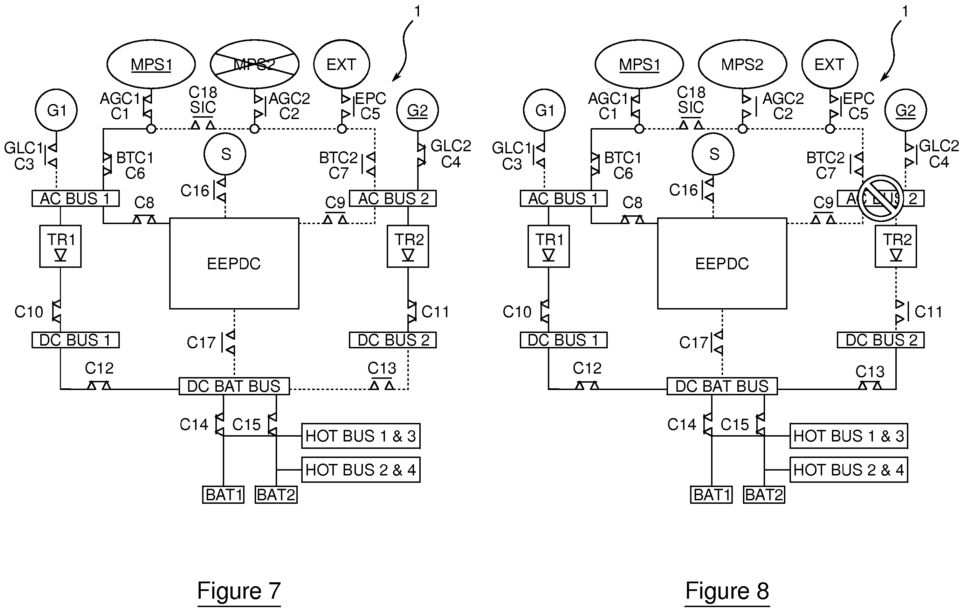

Selon cette hypothèse, en référence à la figure 7, si le deuxième groupe de puissance principal MPS2 comporte un défaut, la partie droite du réseau 1 n'est plus directement alimentée. Étant donné que le premier groupe de puissance principal MPS1 ne peut pas prendre à sa charge les bus de distribution de la partie droite (ACBUS2, DCBUS2) en plus de ceux de la partie gauche du réseau d'alimentation 1, le deuxième générateur de moteur propulsif G2 est activé pour suppléer le deuxième groupe de puissance principal MPS2 comme illustré à la figure 7. A cet effet, le module de gestion commande en fermeture le contacteur C4 tandis que le contacteur C7 reste ouvert.

Dans cet exemple, le deuxième générateur G2 alimente électriquement le bus de distribution ACBUS2, le transformateur TR2 ainsi que e bus de distributionDCBUS2. Les batteries BAT1, BAT2 sont, pour leur part, rechargées par le premier groupe de puissance MPS1 comme représenté à la figure 7.

Il va de soi que l'invention s'applique de manière similaire en cas de dysfonctionnement du premier groupe de puissance principal MPS1, le premier générateur G1 prenant alors le relais.

En référence à la figure 8, dans l'hypothèse selon laquelle le deuxième groupe de puissance MPS2 et le bus de distribution ACBUS2 comportent un défaut, le deuxième générateur de moteur propulsif G2 ne peut pas alimenter le bus de distribution DCBUS2.

Aussi, le module de gestion commande le contacteur C13 afin de relier le bus de distribution DCBUS2 au bus de batterie DCBATBUS.

Autrement dit, le module de gestion permet une alimentation de la partie droite du réseau 1 dans la limite de la capacité d'alimentation du premier groupe de puissance principal MPS1. Dans cet exemple, en référence à la figure 8, le premier groupe de puissance MPS1 alimente l'ensemble de la partie gauche du réseau 1 mais également le bus DCBUS2 via le bus DCBATBUS.

II va de soi que l'invention s'applique de manière similaire en cas de dysfonctionnement du premier groupe de puissance principal MPS1 et du bas ACBUS1, la gestion du réseau d'alimentation étant avantageusement symétrique.

Il va de soi qu'un générateur de moteur propulsif G1, G2 pourrait également être utilisé pour apporter un complément d'énergie alors que le groupe de puissance principal est dimensionné pour alimenter l'ensemble du réseau d'alimentation 1. Une telle gestion de l'énergie électrique permet de garder de l'énergie en réserve en cas de besoin.

### - Alimentation en vol en conditions de secours : défaillance de deux groupes de puissance MPS

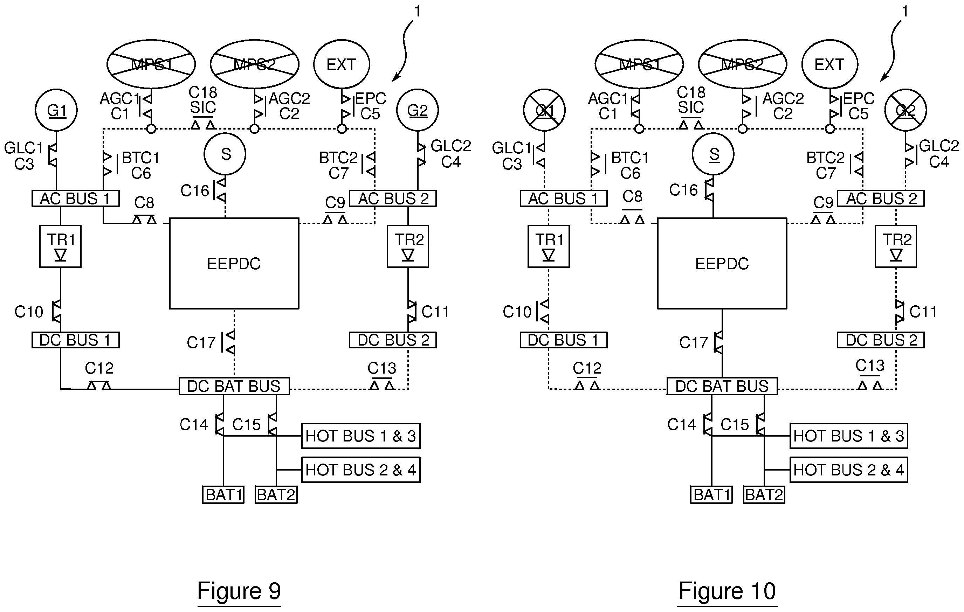

Selon l'invention, en cas de dysfonctionnement des groupes de puissance principaux MPS1, MPS2, le module de gestion commande une alimentation des bus de distribution par les générateurs de moteur propulsif G1, G2 comme illustré à la figure 9. A cet effet, les contacteurs C3 et C4 sont fermés par le module de gestion tandis que les contacteurs C1, C2 demeurent ouverts.

En référence à la figure 9, lorsque l'aéronef est en vol, le réseau d'alimentation électrique 1 est alimenté par les générateurs de moteur propulsif G1, G2 qui alimentent respectivement la partie gauche et la partie droite du réseau d'alimentation électrique 1. De manière avantageuse, le générateur G1 permet le rechargement des batteries BAT1, BAT2 de l'aéronef comme illustré à la figure 9.

Contrairement à l'art antérieur dans lequel les générateurs G1, G2 étaient utilisés en fonctionnement autonome (vol ou roulage) en conditions normales, ces derniers sont uniquement utilisés lors d'un fonctionnement de secours.

### - Alimentation en vol en conditions d'urgence

Selon l'invention, en cas de dysfonctionnement, d'une part, des groupes de puissance MPS1, MPS2 et, d'autre part, des générateurs G1, G2, le sous-réseau d'urgence EEPDC est alimenté par une source d'énergie d'urgence S qui se présente ici sous la forme d'une hélice de génération d'énergie RAT, le contacteur C16 étant alors fermé. Les batteries BAT1, BAT2 participent également à l'alimentation, le contacteur C17 étant également fermé. Une telle alimentation d'urgence est similaire à l'art antérieur.

## Revendications

1. Procédé de gestion d'un réseau d'alimentation électrique (1) d'un aéronef, le réseau d'alimentation (1) comportant :
- au moins deux bus de distribution (ACBUS1, ACBUS2, DCBUS1, DCBUS2) agencés pour alimenter des charges électriques, les bus de distribution appartenant respectivement à une partie droite, dite première partie, et à une partie gauche, dite deuxième partie, du réseau d'alimentation ;
- au moins un générateur (G1, G2) d'un moteur propulsif de l'aéronef adapté pour fournir une source d'énergie électrique ;
- un premier groupe de puissance principal de classe moteur (MPS1) et un deuxième groupe de puissance principal de classe moteur (MPS2) adaptés pour fournir une source d'énergie électrique, le premier groupe de puissance principal de classe moteur (MPS1) et le deuxième groupe de puissance principal de classe moteur (MPS2) alimentant respectivement le bus de distribution de la première partie et le bus de distribution de la deuxième partie du réseau d'alimentation (1) en conditions normales de fonctionnement de l'aéronef ;
- une pluralité de contacteurs (C1-C18) adaptés pour connecter électriquement les bus de distribution (ACBUS1, ACBUS2, DCBUS1, DCBUS2) avec le générateur de moteur propulsif (G1, G2) et/ou les premier et deuxième groupes de puissance principal (MPS1, MPS2) ; et
- un module de gestion adapté pour commander les contacteurs (C1-C18) ;
procédé dans lequel :
- en conditions normales de fonctionnement de l'aéronef, le module de gestion commande les contacteurs (C1-C18) de manière à alimenter les bus de distribution (ACBUS1, ACBUS2, DCBUS1, DCBUS2) par les premier et deuxième groupes de puissance principal de classe moteur (MPS1, MPS2) et
- en fonctionnement de secours de l'aéronef, le module de gestion commande les contacteurs (C1-C18) de manière à alimenter les bus de distribution (ACBUS1, ACBUS2, DCBUS1, DCBUS2) par le générateur de moteur propulsif (G1, G2).

2. Procédé selon la revendication 1, dans lequel, en conditions normales de fonctionnement de l'aéronef, les bus de distribution (ACBUS1, ACBUS2, DCBUS1, DCBUS2) sont alimentés exclusivement par les premier et deuxième groupes de puissance principal de classe moteur (MPS1, MPS2).

3. Procédé selon la revendication 1, dans lequel, le deuxième groupe de puissance principal de classe moteur (MPS2) alimente à lui seul les bus de distribution (DCBUS1, ACBUS1, DCBUS2, ACBUS2) de la première partie et de la deuxième partie du réseau d'alimentation (1) en cas de dysfonctionnement du premier groupe de puissance principal de classe moteur (MPS1).

4. Procédé selon la revendication 1, dans lequel, le deuxième groupe de puissance principal de classe moteur (MPS2) alimente le bus de distribution (DCBUS2, ACBUS2) de la deuxième partie du réseau d'alimentation (1) et le générateur de moteur propulsif (G1) alimente le bus de distribution (DCBUS1, ACBUS1) de la première partie du réseau d'alimentation (1) en cas de dysfonctionnement du premier groupe de puissance principal de classe moteur (MPS1).

5. Procédé selon l'une des revendications 1 à 4, dans lequel, le réseau d'alimentation (1) comportant un premier générateur de moteur propulsif (G1) et un deuxième générateur de moteur propulsif (G2), le premier générateur (G1) et le deuxième générateur (G2) alimentent respectivement le bus de distribution (DCBUS1, ACBUS1) de la première partie et le bus de distribution (DCBUS2, ACBUS2) de la deuxième partie du réseau d'alimentation (1) en fonctionnement de secours de l'aéronef.

6. Procédé selon l'une des revendications 1 à 5, dans lequel, le réseau d'alimentation (1) comportant un sous-réseau d'alimentation d'urgence (EEPDC), le module de gestion commande les contacteurs (C1-C18) de manière à alimenter le sous-réseau d'alimentation d'urgence (EEPDC) par une source d'énergie d'urgence indépendante (S) en cas de dysfonctionnement du générateur de moteur propulsif (G1, G2) en fonctionnement de secours.

## Patentansprüche

1. Verfahren zur Verwaltung eines Stromversorgungsnetzes (1) eines Flugzeugs, wobei das Versorgungsnetz (1) beinhaltet:
- mindestens zwei Verteilungsbusse (ACBUS1, ACBUS2, DCBUS1, DCBUS2), angeordnet, um elektrische Lasten zu versorgen, wobei die Verteilungsbusse jeweils einem rechten Teil, erster Teil genannt, und einem linken Teil, zweiter Teil genannt, des Versorgungsnetzes angehören;
- mindestens einen Generator (G1, G2) eines Antriebsmotors des Flugzeugs, angepasst, um eine elektrische Stromquelle bereitzustellen;
- eine erste Hauptleistungsgruppe einer Motorklasse (MPS1) und eine zweite Hauptleistungsgruppe einer Motorklasse (MPS2), angepasst, um eine elektrische Energiequelle bereitzustellen, wobei die erste Hauptleistungsgruppe einer Motorklasse (MPS1) und die zweite Hauptleistungsgruppe einer Motorklasse (MPS2) unter normalen Betriebsbedingungen des Flugzeugs jeweils den Verteilungsbus des ersten Teils und den Verteilungsbus des zweiten Teils des Versorgungsnetzes (1) versorgen;
- eine Vielzahl von Schützen (C1-C18), angepasst, um die Verteilungsbusse (ACBUS1, ACBUS2, DCBUS1, DCBUS2) elektrisch mit dem Generator eines Antriebsmotors (G1, G2) und/ oder der ersten und zweiten Hauptleistungsgruppe (MPS1, MPS2) zu verbinden; und
- ein Verwaltungsmodul, angepasst, um die Schütze (C1-C18) zu steuern;
Verfahren, bei dem:
- unter normalen Betriebsbedingungen des Flugzeugs das Verwaltungsmodul die Schütze (C1-C18) derart steuert, dass die Verteilungsbusse (ACBUS1, ACBUS2, DCBUS1, DCBUS2) durch die erste und zweite Hauptleistungsgruppe einer Motorklasse (MPS1, MPS2) versorgt werden, und
- im Hilfsbetrieb des Flugzeugs das Verwaltungsmodul die Schütze (C1-C18) derart steuert, dass die Verteilungsbusse (ACBUS1, ACBUS2, DCBUS1, DCBUS2) durch den Generator eines Antriebsmotors (G1, G2) versorgt werden.

2. Verfahren nach Anspruch 1, wobei unter normalen Betriebsbedingungen des Flugzeugs die Verteilungsbusse (ACBUS1, ACBUS2, DCBUS1, DCBUS2) ausschließlich durch die erste und zweite Hauptleistungsgruppe einer Motorklasse (MPS1, MPS2) versorgt werden.

3. Verfahren nach Anspruch 1, wobei die zweite Hauptleistungsgruppe einer Motorklasse (MPS2) alleine die Verteilungsbusse (DCBUS1, ACBUS1, DCBUS2, ACBUS2) des ersten Teils und des zweiten Teils des Versorgungsnetzes (1) im Falle einer Funktionsstörung der ersten Hauptleistungsgruppe einer Motorklasse (MPS1) versorgt.

4. Verfahren nach Anspruch 1, wobei die zweite Hauptleistungsgruppe einer Motorklasse (MPS2) den Verteilungsbus (DCBUS2, ACBUS2) des zweiten Teils des Versorgungsnetzes (1) versorgt, und der Generator eines Antriebsmotors (G1) den Verteilungsbus (DCBUS1, ACBUS1) des ersten Teils des Versorgungsnetzes (1) im Falle einer Funktionsstörung der ersten Hauptleistungsgruppe einer Motorklasse (MPS1) versorgt.

5. Verfahren nach einem der Ansprüche 1 bis 4, wobei, da das Versorgungsnetz (1) einen ersten Generator eines Antriebsmotors (G1) und einen zweiten Generator eines Antriebsmotors (G2) beinhaltet, der erste Generator (G1) und der zweite Generator (G2) jeweils den Verteilungsbus (DCBUS1, ACBUS1) des ersten Teils und den Verteilungsbus (DCBUS2, ACBUS2) des zweiten Teils des Versorgungsnetzes (1) im Hilfsbetrieb des Flugzeugs versorgen.

6. Verfahren nach einem der Ansprüche 1 bis 5, wobei, da das Versorgungsnetz (1) ein Notversorgungs-Unternetz (EEPDC) beinhaltet, das Verwaltungsmodul die Schütze (C1-C18) derart steuert, um im Falle einer Funktionsstörung des Generators eines Antriebsmotors (G1, G2) das Notversorgungs-Unternetz (EEPDC) durch eine unabhängige Notenergiequelle (S) im Notbetrieb zu versorgen.

## Claims

1. Method for managing an electrical power supply system (1) of an aircraft, the power supply system (1) comprising:
- at least two distribution bus (ACBUS1, ACBUS2, DCBUS1, DCBUS2) arranged so as to power electrical loads, the distribution buses belonging respectively to a right-hand portion, said first portion, and a left-hand portion, said second portion, of the power supply system;
- at least one generator (G1, G2) of a propulsion engine of the aircraft which is capable of providing a supply of electrical energy;
- a first engine-class main power unit (MPS1) and a second engine-class main power unit (MPS2) which are capable of providing a supply of electrical energy, the first engine-class main power unit (MPS1) and the second engine-class main power unit (MPS2) respectively supply the distribution bus of the first portion and the distribution bus of the second portion of the power supply system (1) during normal operating conditions of the aircraft ;
- a plurality of contactors (C1-C18) which are capable of electrically connecting the distribution buses (ACBUS1, ACBUS2, DCBUS1, DCBUS2) to the propulsion engine generator (G1, G2) and/or the first and second main power units (MPS1, MPS2); and
- a management module which is capable of controlling the contactors (C1-C18);
method wherein:
- during normal operating conditions of the aircraft, the management module controls the contactors (C1-C18) so as to power the distribution buses (ACBUS1, ACBUS2, DCBUS1, DCBUS2) using the first and second engine-class main power units (MPS1, MPS2) and
- during back-up operating conditions of the aircraft, the management module controls the contactors (C1-C18) so as to power the distribution buses (ACBUS1, ACBUS2, DCBUS1, DCBUS2) using the propulsion engine generator (G1, G2).

2. Method according to claim 1, wherein, during normal operating conditions of the aircraft, the distribution buses (ACBUS1, ACBUS2, DCBUS1, DCBUS2) are powered exclusively by the first and second engine-class main power units (MPS1, MPS2).

3. Method according to claim 1, wherein the second engine-class main power unit (MPS2) alone powers the distribution buses (DCBUS1, ACBUS1, DCBUS2, ACBUS2) of the first portion and the second portion of the power supply system (1) in the event of a malfunction of the first engine-class main power unit (MPS1).

4. Method according to claim 1, wherein the second engine-class main power unit (MPS2) powers the distribution bus (DCBUS2, ACBUS2) of the second portion of the power supply system (1) and the propulsion engine generator (G1) powers the distribution bus (DCBUS1, ACBUS1) of the first portion of the power supply system (1) in the event of a malfunction of the first engine-class main power unit (MPS1).

5. Method according to any of claims 1 to 4, wherein, the power supply system (1) comprising a first propulsion engine generator (G1) and a second propulsion engine generator (G2), the first generator (G1) and the second generator (G2) respectively power the distribution bus (DCBUS1, ACBUS1) of the first portion and the distribution bus (DCBUS2, ACBUS2) of the second portion of the power supply system (1) during back-up operating mode of the aircraft.

6. Method according to any of claims 1 to 5, wherein, the power supply system (1) comprising an emergency back-up power supply system (EEPDC), the management module controls the contactors (C1-C18) in such a way as to power the emergency back-up power supply system (EEPDC) using an independent emergency power source (S) in the event of a malfunction of the propulsion engine generator (G1, G2) during back-up operating mode.
